# EUROPEAN PATENT SPECIFICATION

(11) **EP 3 615 873 B1**
(45) Date of publication and mention of the grant of the patent: **10.11.2021**
(21) Application number: 18798328.3
(22) Date of filing: 10.05.2018
(51) Int. Cl.: F25D 23/06, F16L 59/065, F16L 59/02, C08J 9/36, B65D 81/38, C08J 9/28, C08J 9/00

(54) **REFRIGERATOR**
KÜHLSCHRANK
RÉFRIGÉRATEUR

(30) Priority: 12.05.2017 JP 2017095408; 24.10.2017 JP 2017205419; 02.03.2018 KR 20180025032
(43) Date of publication of application: 04.03.2020
(73) Proprietor: Samsung Electronics Co., Ltd., Suwon-si, Gyeonggi-do 16677 (KR)
(72) Inventor: ADACHI, Go, Yokohama-shi Kanagawa 230-0027 (JP); SHIMOMURA, Yoriko, Yokohama-shi Kanagawa 230-0027 (JP); OSHITA, Masamichi, Yokohama-shi Kanagawa 230-0027 (JP); FUKUZAKI, Tomokazu, Yokohama-shi Kanagawa 230-0027 (JP)
(74) Representative: Walaski, Jan Filip
(86) International application number: PCT/KR2018/005350
(87) International publication number: WO 2018/208090

(56) References cited:
- CN-A- 103 790 627
- CN-U- 203 719 292
- JP-A- 2004 340 194
- JP-A- 2009 162 402
- KR-A- 20160 012 645
- US-A- 2 779 066
- US-A- 5 386 706
- US-A1- 2002 153 817
- US-A1- 2009 082 479
- US-A1- 2015 053 699
- US-A1- 2015 225 630

## Description

### Technical Field

The present disclosure relates to a refrigerator having a composite heat insulating material.

### Background Art

Flexible aerogel super-insulating materials manufactured by impregnating a fiber matrix with an aerogel in a precursor form and supercritically drying the aerogel precursor under pressure have been known in the art.

Heat insulating materials manufactured by laminating a heat insulating package in which fine aerogels, carbon black particles or fibers, foamed sheets, or the like are sealingly filled, preferably in a reduced pressure or vacuum state, on a base material have also been known in the art.

Refrigerators in which a composite heat insulating material including an aerogel and a fibrous structure and formed by immersing the fibrous structure in an aerogel precursor and supercritically drying the aerogel precursor to form the aerogel is installed in voids between an outer case and an inner case of a main body of the refrigerator and/or voids between an outer material of doors and an inner material of the doors have also been known in the art.

Refrigerators in which a composite heat insulating material including an aerogel and a fibrous structure formed by immersing the fibrous structure in an aerogel precursor and supercritically drying the aerogel precursor to form the aerogel is attached to inner walls of the refrigerators such as inner surfaces of doors; the composite heat insulating material is attached to inner or outer surfaces of containers, ducts, dampers, and partitions walls; or the composite heat insulating material is installed inside gaskets of edges of the doors have also been known in the art. An example of such a refrigerator is described in CN 203719292 U.

### Disclosure of Invention

### Technical Problem

When a composite heat insulating material including a fibrous structure and an aerogel or xerogel includes an external material, arrangement of the composite heat insulating material in a case may be inconvenient.

Therefore, it is an aspect of the present disclosure to provide a composite heat insulating material including a fibrous structure and an aerogel or xerogel having excellent heat insulating property and conveniently arranged in a case.

Additional aspects of the disclosure will be set forth in part in the description which follows and, in part, will be obvious from the description, or may be learned by practice of the disclosure.

Under such a purpose, the present disclosure provides a refrigerator according to claim 1 having a composite comprising a fibrous structure and an aerogel or xerogel, the composite has voids for retaining the gas and the gas comprises a low thermal conductivity gas which is a gas with a lower thermal conductivity than air do. In this case, the void may inhibit scattering of gas molecules to suppress diffusion of heat, and may be configured to inhibit gas molecules from moving out of the void at a predetermined temperature.

Here, the composite may have voids distributed to have a peak at an average free process in the atmospheric pressure of the low thermal conductivity gas.

Further, the low thermal conductivity gas includes gas used in the foamed resin insulating material to be filled when the composite heat insulating material is disposed in the case.

In addition, the fibrous structure may have a three-dimensional shape corresponding to component of the case in which the composite heat insulating material is disposed.

The present disclosure also provides a method for producing a composite having a fibrous structure and an aerogel or a xerogel and a void, and a method for producing step of forming the void having a thermal conductivity lower than that of air and sealing the thermal conductivity gas in the void without using exterior material covering the composite. A method of manufacturing a composite heat insulating material including a step of sealing a thermal conductivity gas is also provided. In this case, the void may inhibit scattering of gas molecules to suppress diffusion of heat, and may be configured to inhibit gas molecules from moving out of the void at a predetermined temperature.

Further, the present disclosure discloses a refrigerator according to claim 1 having a composite heat insulating material in which a low thermal conductivity gas, which is a gas having a thermal conductivity lower than that of air, is enclosed in voids of a fibrous structure and a composite of an aerogel or a xerogel without exterior material covering the composite. The present disclosure also discloses a heat insulating part having a resin member formed by inserting the composite heat insulating material into a mold without a covering material to fill the molten resin.

### Solution to Problem

According to an aspect of the present invention, there is provided a refrigerator according to claim 1.

According to the present disclosure, there is also provided a refrigerator according to claim 1 having a heat insulating case including an inner case having a space therein, an outer case provided outside the inner case, a composite heat insulating material having a fiber structure disposed between the inner case and the outer case without using a covering material and a composite made of an aerogel or a xerogel, a vacuum insulating material disposed between the inner case and the outer case, and a foamed resin insulating material filled between the inner case and the outer case. Alternatively, the present disclosure provides a heat insulating case including an inner case having a space therein, an outer case disposed outside the inner case, a composite heat insulating material disposed between the inner case and the outer case without using a cover material, and a foamed resin insulating material filled between the inner case and the outer case.

Here, the composite heat insulating material and the vacuum heat insulating material are attached to the surface of the inner case or the outer case so that the covering ratio with respect to the surface area is more than 40% and less than 100%, and the foamed resin insulating material is provided between the inner case and the outer case so that the covering ratio of the foamed resin insulating material with respect to the surface area becomes the remaining covering ratio of the composite heat insulating material and the vacuum heat insulating material.

The foamed resin insulating material may be filled in order to fix the composite heat insulating material to the inner case, the outer case, or the vacuum insulating material.

In this case, the composite heat insulating material may be one in which a portion of the surface contacting the inner case, the outer case, or the vacuum heat insulating material is cut, the lowering of the rigidity is suppressed, and the processing for enhancing the bonding strength is performed.

The vacuum insulating material is attached to the surface of the inner case or the outer case, and the composite insulating material may be attached to the surface of the inner case or the outer case from above the vacuum insulating material.

Further, the composite insulating material includes a gas enclosed in the void, and includes a low thermal conductivity gas which is a gas whose thermal conductivity is lower than that of air.

The composite heat insulating material may have a sheet shape and may be attached to the inner case or the outer case surface as a single layer or laminated.

In this case, the outer case is formed by bending the outer plate, and the composite heat insulating material has the same shape as the developed view of the outer case, and may be attached to the outer plate corresponding to the inner surface of the outer case. In this case, the composite heat insulating material is attached in a state in which the fibrous structure is immersed in a precursor of an aerogel or a xerogel in addition to the bent portion of the outer plate, and the fibrous structure is attached to the bent portion of the outer plate in a state in which the fibrous structure is not immersed in a precursor of an aerogel or a xerogel. And in this case, the composite heat insulating material may be a laminate of U-shaped or V-shaped cut parts formed on the bent part of the outer side plate.

In addition, the foamed resin insulating material may be formed so as to conform to the three-dimensional shape of the surface of the inner case or the outer case using foaming pressure.

In addition, the present disclosure provides a method of manufacturing an insulating case including a step of disposing a vacuum insulation material on one side of an outer side plate, a step of disposing a composite insulation material made of a fiber structure and an aerogel or a xerogel on one side of an outer side plate without using cover material, a step of forming an outer case by bending the inner case to be an inner surface, a step of providing an outer case on the outer side of the inner case having a space therein, and a step of filling the foamed resin insulating material between the inner case and the outer case.

### Advantageous Effects of Invention

According to the present disclosure, a composite heat insulating material including a fibrous structure and an aerogel or xerogel, easily disposed in a case, and having excellent heat insulating property is provided.

### Brief Description of Drawings

FIGS. 1A and 1B are diagrams for explaining a method of replacing the gas inside the aerogel with the low thermal conductivity gas according to the first embodiment of the present disclosure.
FIG. 1C is a graph showing the result of comparing the thermal conductivity of a composite heat insulating material obtained by replacing a gas in a composite with a low heat conductivity gas and the thermal conductivity of the low heat conductivity gas in the first embodiment of the present disclosure.
FIG. 2 is a flowchart showing a step of replacing the gas inside the aerogel with the low thermal conductivity gas in the first embodiment of the present disclosure.
FIG. 3 is a view showing an example of a heat insulating part manufactured by insert molding in the first embodiment of the present disclosure.
FIG. 4 is a flowchart showing a step of manufacturing a heat insulating part by insert molding according to the first embodiment of the present disclosure.
FIG. 5 is a view showing a state in which a composite heat insulating material is disposed on a developed view of an outer surface of a refrigerator case according to a second embodiment of the present disclosure.
FIG. 6 is a perspective view showing a state of the case of the refrigerator before the outer case is bent according to the second embodiment of the present disclosure.
FIG. 7 is a perspective view showing a state in which a vacuum insulating material is attached to an outer case of a refrigerator according to a second embodiment of the present disclosure.
FIG. 8 is a perspective view showing a state in which a composite heat insulating material is attached to an outer case of a refrigerator according to a second embodiment of the present disclosure.
FIG. 9 is a perspective view showing a state of the case of the refrigerator according to the second embodiment of the present disclosure after bending the outer case.
FIG. 10 is a flowchart showing a manufacturing process of a heat insulating case of a refrigerator according to a second embodiment of the present disclosure.
FIG. 11 is a view showing a state in which the composite heat insulating materials according to the second embodiment of the present disclosure are stacked and attached.
FIG. 12 is a view showing an example of a building wall according to the third embodiment of the present disclosure.

### Best Mode for Carrying out the Invention

Reference will now be made in detail to the embodiments of the present disclosure, examples of which are illustrated in the accompanying drawings, wherein like reference numerals refer to like elements throughout.

The terms used in the present specification are merely used to describe particular embodiments, and are not intended to limit the present disclosure. Throughout the specification, a singular form may include plural forms, unless there is a particular description contrary thereto. In the present specification, it is to be understood that the terms such as "including" or "having," etc., are intended to indicate the existence of the components, features, numbers, steps, operations, or combinations thereof disclosed in the specification, and are not intended to preclude the possibility that one or more other components, features, numbers, steps, operations, or combinations thereof may exist or may be added.

It will be understood that, although the terms "first", "second", etc., may be used herein to describe various elements, these elements should not be limited by these terms. The above terms are used only to distinguish one component from another. For example, a first component discussed below could be termed a second component, and similarly, the second component may be termed the first component without departing from the teachings of this disclosure. As used herein, the term "and/or" includes any and all combinations of one or more of the associated listed items.

Meanwhile, the terms used throughout the specification "front", "upper", "lower", "left", and "right", and the like are defined based on the drawings and the shape and position of each element are not limited by these terms.

Hereinafter, embodiments of the present disclosure will be described in detail with reference to accompanying drawings.

### [First embodiment]

According to a first embodiment, provided are a composite heat insulating material including a composite, which is formed of a fibrous structure and an aerogel or xerogel and has voids filled with a gas having a lower thermal conductivity than air (hereinafter, referred to as "low thermal conductivity gas") instead of air, and without exterior material and a method of manufacturing the same.

The composite heat insulating material according to the first embodiment is prepared according to the following procedure.

A fibrous structure is immersed in an aerogel precursor and supercritically dried to manufacture a composite formed of an aerogel and the fibrous structure. Alternatively, the fibrous structure is immersed in the aerogel precursor and dried at room temperature and atmospheric pressure to prepare a composite formed of xerogel and the fibrous structure. Since voids of an aerogel or xerogel of the composite are smaller than mean free paths of air, air does not flow unless a pressure of 200 Pa or greater is applied thereto. That is, convection heat transfer by air is suppressed and heat insulating property is maintained.

However, the composite still has a higher thermal conductivity than a vacuum heat insulating material. Thus, air having a higher thermal conductivity and filled in the voids of the aerogel or xerogel of the composite is substituted with a low thermal conductivity gas by pressure according to the first embodiment to prepare a composite heat insulating material having a low thermal conductivity, thereby improving the heat insulating property of the composite heat insulating material.

Hereinafter, the embodiment will be described in detail based on the composite heat insulating material formed of the fibrous structure and the aerogel.

First, a surfactant, urea, and a metal alkoxide such as methyltrimethoxy silane are dissolved in an acidic aqueous solution of acetic acid and the solution is subjected to hydrolysis to prepare an aerogel precursor. A fibrous structure is impregnated with the aerogel precursor so that the liquid aerogel precursor penetrates and spreads around each fiber. Then, the impregnated fibrous structure is heated to 60°C or higher to cause polycondensation reaction in the aerogel precursor, and then the resultant is supercritically dried to form an aerogel. As a result, a composite including the aerogel reinforced with the fibrous structure is obtained.

Subsequently, air filled in the aerogel is substituted with the low thermal conductivity gas by sucking air from the prepared composite formed of the fibrous structure and the aerogel to reduce pressure therein and blowing the low thermal conductivity gas thereinto at a pressure of 200 Pa or greater.

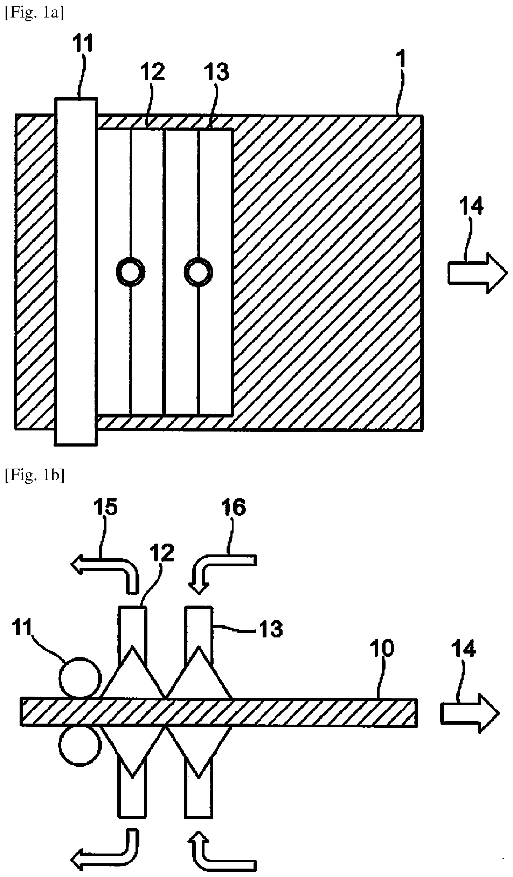

FIGS. 1A and 1B are diagrams for describing this replacement method. Meanwhile, substitution of air filled in the aerogel with the low thermal conductivity gas may be conducted by sucking air from one surface of the composite to reduce the pressure and blowing the low thermal conductivity gas to the other surface of the composite. Here, however, a case of substitution performed by sucking air from both surfaces of the composite and blowing the low thermal conductivity gas to the both surfaces will be described.

FIG. 1A is a top view for describing this substitution method. As illustrated herein, in order to substitute air filled in a composite 1 formed of a fibrous structure and an aerogel with a low thermal conductivity gas, a device including a conveying roller 11 to transport a plate material of the composite 1, an air sucking duct 12 to suck air filled in the composite 1, and a gas injecting duct 13 to blow the low thermal conductivity gas into the composite 1 under pressure is used. That is, the composite 1 is mounted on the device and transported in a direction indicated by an arrow 14 by using the conveying roller 11.

FIG. 1B is a side view for describing this substitution method. As illustrated herein, air filled in the composite 1 is sucked by the air sucking duct 12 in a direction indicated by an arrow 15 and the inside of the composite 1 is depressurized. Then, the pressurized low thermal conductivity gas is sent in a direction indicated by an arrow 16 by the gas injecting duct 13, so that molecules of the low thermal conductivity gas are filled in voids of the aerogel. Thus, a composite heat insulating material 10 is prepared.

In the composite heat insulating material 10, the molecules of the low thermal conductivity gas filled in the voids of the aerogel are surrounded by backbones of silica molecules of the aerogel, and thus molecules of the low thermal conductivity gas located at the center of the composite heat insulating material 10 remain retained. While the low thermal conductivity gas located on the surface of the composite heat insulating material 10 may be substituted with air, the low thermal conductivity gas located inside the composite heat insulating material 10 is surrounded by the backbones of the silica molecules of the aerogel, making it difficult to move.

More particularly, in an area where voids of the aerosol are smaller than mean free paths of the low thermal conductivity gas, the low thermal conductivity gas is not scattered at atmospheric pressure but remains in the aerosol. When there is a large area in which voids of the aerosol are smaller than mean free paths of the low thermal conductivity gas, there is no need to perform vacuuming by using an external material. For example, it is sufficient that void distribution of the aerogel has a peak at the mean free path of the low thermal conductivity gas or less at atmospheric pressure. More generally, the aerogel may have voids that inhibit diffusion of heat by suppressing scattering of molecules of a gas and prevent the molecules of the gas from moving out of the voids at a predetermined temperature.

Thermal conductivity of the composite heat insulating material 10 was measured by using different low thermal conductivity gases. Table 1 shows the measurement results.

**[Table 1]**

| | Component | Inside | Thermal conductivity (mW/mK) |
|---|---|---|---|
| Example 1 | aerogel+PET fiber | CO₂ | 12.6 |
| Example 2 | aerogel+PET fiber | Ar | 11.0 |
| Example 3 | aerogel+PET fiber | Kr | 9.4 |
| Comparative Example 1 | aerogel+PET fiber | air | 13.8 |
| Comparative Example 2 | Urethane (foam) | cyclopentane | 22.0 |

Examples 1 to 3 show measurement results of the composite 1 including the aerogel and polyethylene terephthalate (PET) fiber in which the gas is substituted with carbon dioxide (CO₂), argon (Ar), and krypton (Kr) respectively. Comparative Example 1 shows a measurement result of the composite 1 the same as that used in Examples 1 to 3 in which air is used. Comparative Example 2 shows a measurement result of the composite 1 using only urethane in which the gas is substituted with cyclopentane. Based on the measurement results, it may be confirmed that the thermal conductivities of Examples 1 to 3 are lower than the thermal conductivity of Comparative Example 1 and the thermal conductivity of Comparative Example 2.

That is, not only conventional cyclopentane but also carbon dioxide (CO₂) may be used as the low thermal conductivity gas filled in the composite 1. Alternatively, argon (Ar), krypton (Kr), xenon (Xe), and the like may also be used. In this regard, carbon dioxide (CO₂), argon (Ar), krypton (Kr), xenon (Xe), and the like may be identified as gas species whose molecular weight is greater than the molecular weight of air of 28.8 g/mol at room temperature and atmospheric pressure. When the molecular weight of a gas is greater than that of air, the molecules of the gas cannot vibrate, and thus heat transfer may become difficult, thereby effective. However, any gas species having a smaller molecular weight than that of air at room temperature and atmospheric pressure may also be used as the low thermal conductivity gas filled in the composite 1. In this case, carbon dioxide (CO₂), argon (Ar), krypton (Kr), xenon (Xe), and the like may be regarded as incombustible gas species.

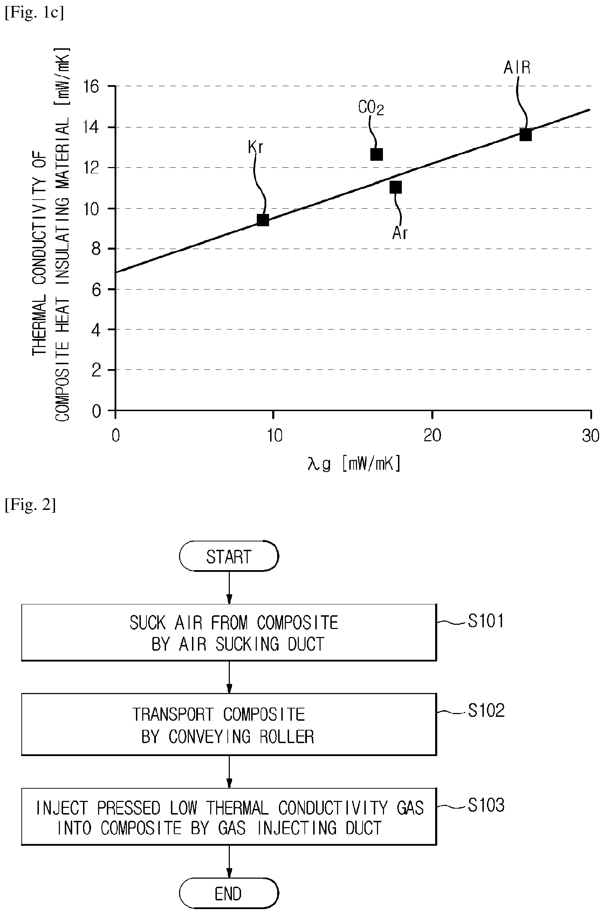

Here, thermal conductivity of the composite heat insulating material 10 in which the gas filled in the composite 1 is substituted with the low thermal conductivity gas was compared with thermal conductivity of a single substance of the low thermal conductivity gas and comparison results will be described. FIG. 1C is a graph illustrating the results of this comparison.

In this graph, a vertical axis indicates measured of thermal conductivity values of the composite heat insulating material 10 and λg of a horizontal axis indicates thermal conductivity of gas at room temperature. Also, in the graph, the "air" indicates a case in which the gas filled in the composite 1 is air. As indicated by a bold solid line in this graph, it may be confirmed that thermal conductivity of the composite heat insulating material 10 prepared by substituting the gas of the composite 1 with the low thermal conductivity gas is almost proportional to the thermal conductivity of the single substance of the low thermal conductivity gas.

FIG. 2 is a flowchart illustrating a process of substituting a gas filled in the aerogel with a low thermal conductivity gas. As illustrated herein, first, air filled in the composite 1 is sucked by the air sucking duct 12 (S101). Next, the composite 1 is transported by the conveying roller 11 (S102). Finally, the low thermal conductivity gas is injected into the composite 1 under pressure by the gas injecting duct 13 (S103).

Meanwhile, in a real process, while the composite 1 is transported by the conveying roller 11, air filled in the composite 1 is sucked by the air sucking duct 12 and the low thermal conductivity gas is injected into the composite 1 by the gas injecting duct 13. Thus, the flowchart of FIG. 2 may be regarded as a process showing only a local area of the composite 1 moving from a position of the air sucking duct 12 to a position of the gas injecting duct 13 by the conveying roller 11.

A gas having a lower thermal conductivity than air is used as the low thermal conductivity gas according to the invention. The gas corresponds to a gas used in a foam resin heat insulating material such as hard urethane foam filled when the composite heat insulating material 10 is arranged in a case such as a refrigerator may also be used.

In addition, although the shape of the fibrous structure is not particularly specified, the fibrous structure may have a shape corresponding to a three-dimensional shape of a component of the case such as the refrigerator in which the composite heat insulating material 10 is disposed.

Next, insert molding using the composite heat insulating material 10 will be described.

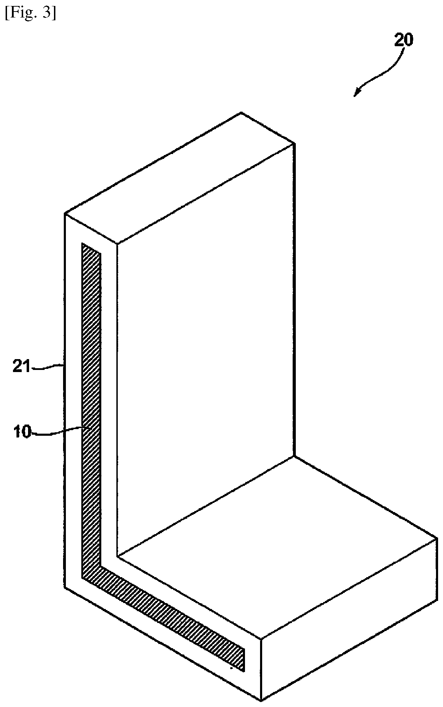

FIG. 3 illustrates an example of a heat insulating component 20 manufactured by insert molding. As described above, the heat insulating component 20 includes the composite heat insulating material 10 and a resin member 21. The composite heat insulating material 10 is the heat insulating material including the composite formed of the fibrous structure and the aerogel or xerogel in which the low thermal conductivity gas is filled in voids of the composite instead of air without using an exterior material as described above. The resin member 21 is a material surrounding the composite heat insulating material 10.

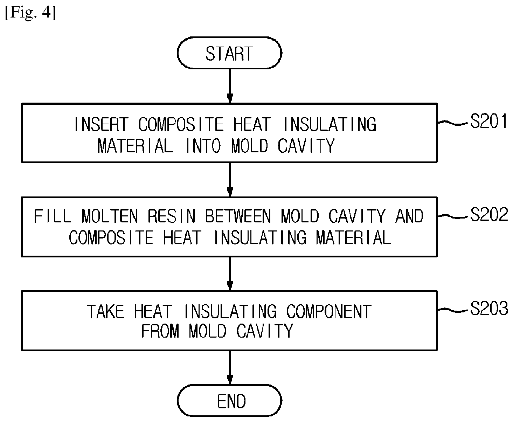

FIG. 4 is a flowchart illustrating a process of manufacturing the heat insulating component 20 by insert molding. As illustrated in the drawing, first, the composite heat insulating material 10 is inserted into a mold cavity (not shown) (S201). Meanwhile, since the composite heat insulating material 10 does not include an exterior material, the composite heat insulating material 10 is inserted thereinto without using the exterior material in this process. Next, a molten resin is filled between the mold cavity and the composite heat insulating material 10 (S202). Accordingly, the molten resin flows in between the mold cavity and the composite heat insulating material 10. Then, the resin is solidified to form the resin member 21 and the composite heat insulating material 10 is integrated with the resin member 21 to form the heat insulating component 20. Finally, the heat insulating component 20 is taken out of the mold cavity (S203).

Since the composite heat insulating material 10 does not include an external material according to the first embodiment as described above, the composite heat insulating material 10 may be easily handled when placed in a case and other convenience may be improved.

Also, since the low thermal conductivity gas is filled in the voids of the composite heat insulating material 10 instead of air, the heat insulating property of the composite heat insulating material 10 may be improved.

In addition, when there is a distribution of voids smaller than the mean free path of the low thermal conductivity gas, 200 Pa or higher pressure is required to substitute air filled in the aerogel or xerogel with the low thermal conductivity gas. After air is substituted with the low thermal conductivity gas, scattering of the low thermal conductivity gas is inhibited at atmospheric pressure. Thus, a large amount of the low thermal conductivity gas may be enclosed in the composite heat insulating material 10 in the atmosphere and long-term reliability thereof may be obtained.

### [Second Embodiment]

A composite heat insulating material formed of a fibrous structure and an aerogel or xerogel has a thermal conductivity higher than that of the vacuum heat insulating material but lower than that of hard urethane foam or foamed styrol. Also, the composite heat insulating material has flexibility that is not possessed by the vacuum heat insulating material. In addition, since there is no exterior material, a screw hole may be formed in the composite heat insulating material at room temperature and atmospheric pressure even after being attached to a case which has been impossible in the vacuum heat insulating material. Thus, according to the second embodiment, provided are a heat insulating case including both the vacuum heat insulating material and the composite heat insulating material and having a coverage ratio of the heat insulating materials of about 100% by using characteristics thereof and a method of manufacturing the same.

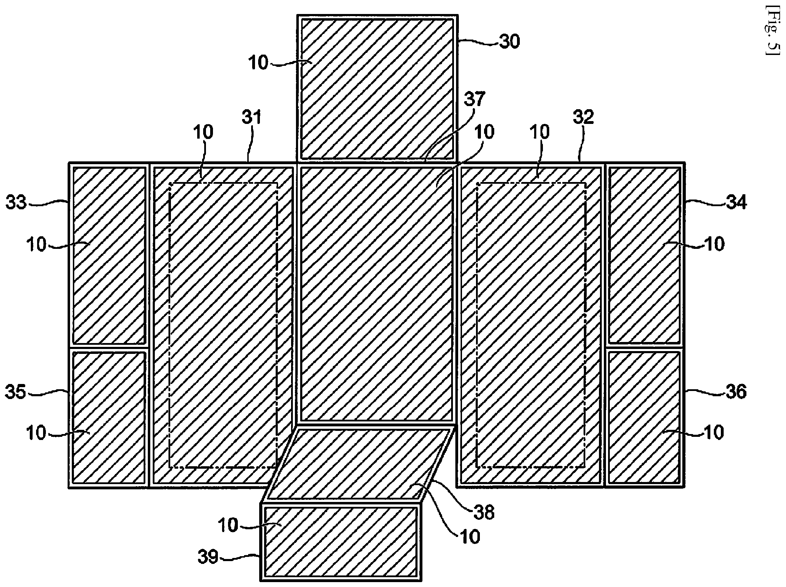

FIG. 5 is a diagram illustrating the composite heat insulating material 10 arranged on a development drawing of an external surface of a case of a refrigerator. In the development drawing, a top surface 30, a left side surface 31, a right side surface 32, a refrigerating compartment left door 33, a refrigerating compartment right door 34, a freezing compartment left door 35, a freezing compartment right door 36, a rear surface 37, a machine room top surface 38, and a machine room front surface 39 are shown.

Here, the composite heat insulating material 10 has a thermal conductivity higher than a thermal conductivity of 1 to 5 mW/mK of a central area of the vacuum heat insulating material but lower than a thermal conductivity of about 20 mW/mK of the hard urethane foam and a thermal conductivity of 30 to 40 mW/mK of the foamed styrol. Also, the composite heat insulating material 10 has flexibility when compared with other materials such as metallic materials or resin materials. In addition, since no external material is used, the composite heat insulating material 10 may be processed by cutting, drilling, and bending at room temperature and atmospheric pressure.

Thus, according to the second embodiment, the composite heat insulating material 10 is laid in a case or some voids of doors and the other voids are filled with hard urethane foam. Thus, while the vacuum heat insulating material cannot be attached to the case with a coverage ratio close to 100%, the composite heat insulating material 10 according to the second embodiment may be effectively assembled to the case efficiently for a manufacturing process of the case with a coverage ratio greater than 40% up to 100%. Accordingly, a heat insulating case with the high heat insulation property may be manufactured, thereby realizing energy saving. In FIG. 5, this is shown as diagonal hatch lines in every surfaces of the development drawing.

Meanwhile, the composite heat insulating material 10 according to the second embodiment, includes the composite 1 having voids filled with the low thermal conductivity gas instead of air like the composite heat insulating material 10 according to the first embodiment.

In addition, in order to further improve the heat insulation property, as indicated by dashed lines in FIG. 5, for example, a part of the composite heat insulating material 10 may be substituted with the vacuum heat insulating material or may be used in combination with the vacuum heat insulating material in the left side surface 31 and the right side surface 32 which are flat and large in area.

Next, a process of manufacturing a heat insulating case of a refrigerator will be described.

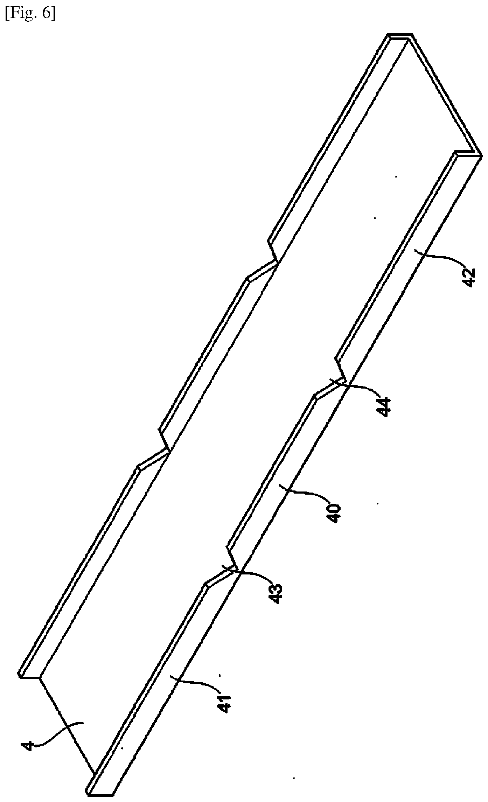

FIG. 6 is a perspective view illustrating an outer case of a case of a refrigerator before being bent. As illustrated herein, the outer case of the case of the refrigerator is an outer plate 4 made of a steel plate and has a flat plate shape before being bent. In this state, flanges 40, 41, and 42 are formed at longitudinal ends of the outer plate 4 and V-shaped cuts 43 and 44 are formed in bent portions.

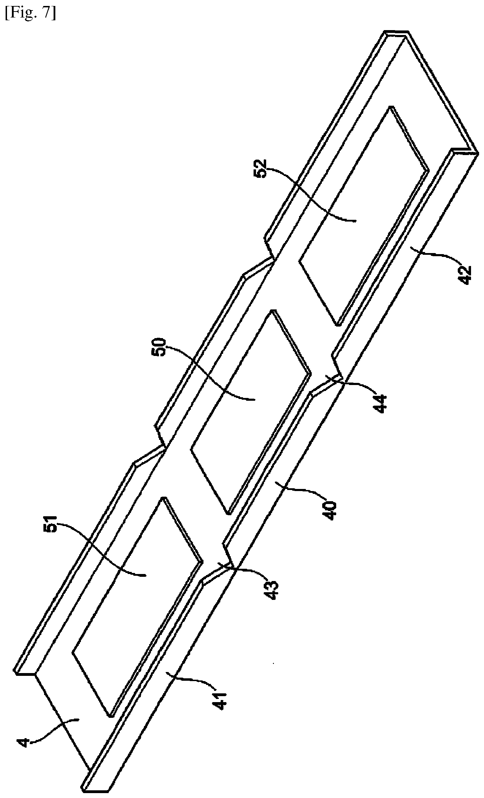

FIG. 7 is a perspective view illustrating a state in which a vacuum heat insulating material attached to the outer case of the case of the refrigerator. As illustrated herein, vacuum heat insulating materials 50, 51, and 52 are attached to an inner surface of the outer plate 4. Meanwhile, an adhesive member used to attach the vacuum heat insulating materials 50, 51, and 52 to the outer plate 4 is gel-like hot melt.

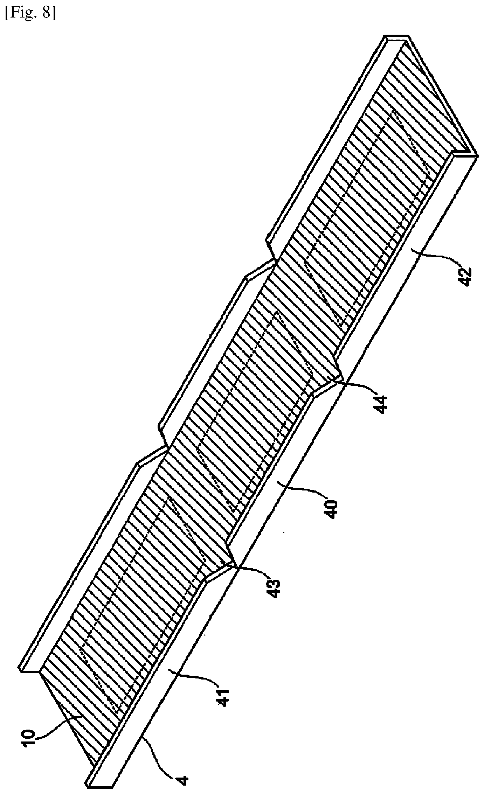

FIG. 8 is a perspective view illustrating a state in which a composite heat insulating material is attached to the outer case of the case of the refrigerator. As illustrated herein, the composite heat insulating material 10 is attached to the entire inner surface of the outer plate 4 to overlap the vacuum heat insulating materials 50, 51, and 52. Thus, rigidity and the heat insulation property of the case are enhanced. Alternatively, the composite heat insulating material 10 may be cut in a shape to corresponding to the areas to which the vacuum heat insulating materials 50, 51, and 52 are attached and attached thereto not to overlap the vacuum heat insulating materials 50, 51, and 52.

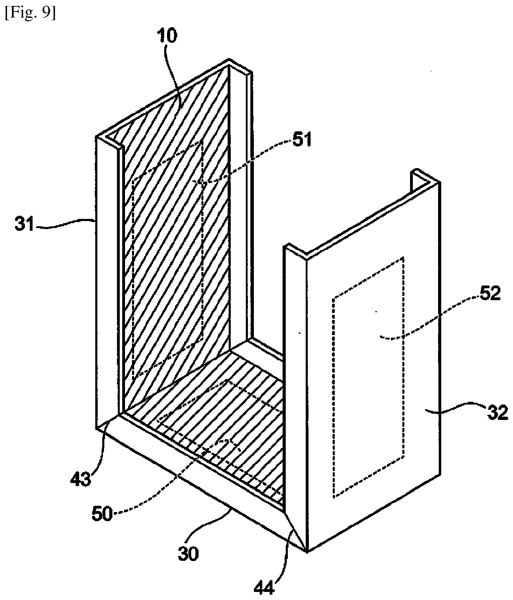

FIG. 9 is a perspective view illustrating a state after the outer case of the case of the refrigerator is bent. As illustrated herein, the outer plate 4 is bent in a U-shape with V-shaped cuts 43 and 44 as bent portions to form the top surface 30, the left side surface 31, and the right side surface 32 of the outer case of the case of the refrigerator. Meanwhile, a jig used to bend the outer plate 4 is not shown.

Next, an inner case or components (not shown) are assembled to the outer case of the case of the refrigerator bent in the 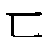 -shape. In addition, a foam resin heat insulating material (not shown) such as hard urethane foam may be filled in a space formed by assembling the inner case or components (not shown) thereto, thereby completing the manufacture of the heat insulating case. In this case, self-adhesive foam resin heat insulating material may also be used to fix the composite heat insulating material to the outer case, the inner case, or the vacuum heat insulating material.

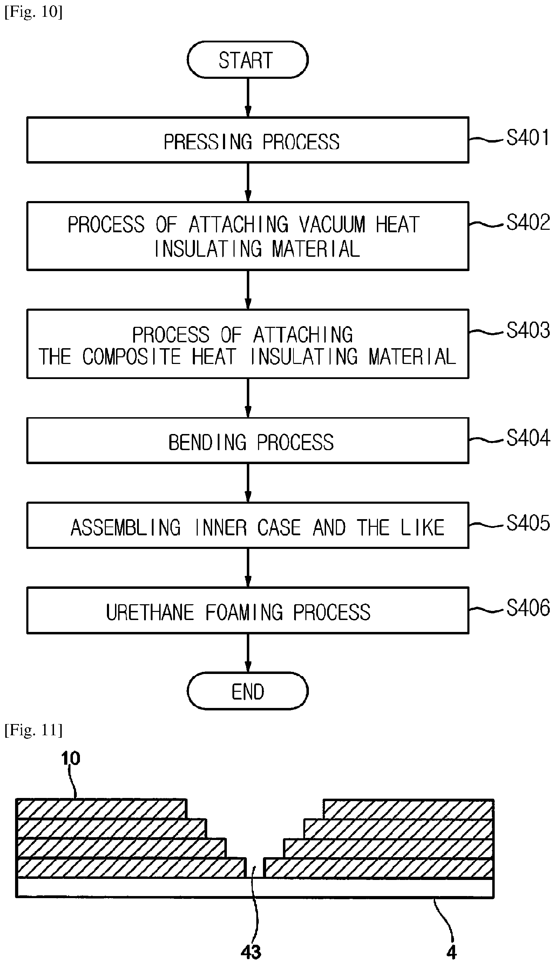

FIG. 10 is a flowchart illustrating a process of manufacturing a heat insulating case of a refrigerator.

As illustrated herein, in this manufacturing process, first, a pressing process is performed (S401). This pressing process corresponds to the process of forming the flanges 40, 41, and 42 and the V-shaped cuts 43 and 44 described above with reference to FIG. 6.

Next, a process of attaching the vacuum heat insulating material is performed (S402). This process of attaching the vacuum heat insulating material corresponds to the process of attaching the vacuum heat insulating materials 50, 51, and 52 to the inner surface of the outer plate 4 described above with reference to FIG. 7. Meanwhile, if the heat insulating property is sufficient, this process of attaching the vacuum heat insulating material may not be performed.

Next, a process of attaching the composite heat insulating material is performed (S403). This process of attaching the composite heat insulating material corresponds to the process of attaching the composite heat insulating material 10 to the entire inner surface of the outer plate 4 described above with reference to FIG. 8.

Next, a bending process is performed (S404). This bending process corresponds to the process of bending the outer plate 4 in the 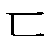 -shape to form the top surface 30, the left side surface 31, and the right side surface 32 of the outer case of the case of the refrigerator described above with reference to FIG. 9.

Next, a process of assembling an inner case and the like is performed (S405). This process of assembling the inner case and the like corresponds to the process of assembling the inner case and the like to the outer case of the case of the refrigerator described above.

Finally, a urethane foaming process is performed (S406). This urethane foaming process corresponds to the process of filling the hard urethane foam in the space formed by assembling the inner case and the like to the outer case of the case of the refrigerator.

In this case, the composite heat insulating material 10 used in the second embodiment does not include an exterior material. Thus, processes of forming holes, penetrating slits, cutting V-shaped or U-shaped grooves, or forming screw holes may be performed in the processes of S401 to S406, the composite heat insulating material 10 may be attached to the entire inner surface of the outer case.

Meanwhile, although the outer plate 4 is bent after attaching the vacuum heat insulating materials 50, 51, and 52 according to the above-mentioned description, the vacuum heat insulating materials 50, 51, and 52 may also be attached after bending the outer plate 4 and then the composite heat insulating material 10 may be attached thereto. As a result, separation of the vacuum heat insulating materials 50, 51, and 52 caused by impact while being bent may be prevented.

In addition, the composite heat insulating material 10 may be in the form of a thin sheet and the composite heat insulating material 10 may be adhered to a bead shape of the outer plate 4 by laminating the same or adhered as a single layer.

Furthermore, the composite heat insulating material 10 may be laminated and attached to the bent portions of the outer plate 4, i.e., the V-shaped cuts 43 and 44. Thus, it is possible to provide excellent appearance with high-quality design by inhibiting piling up (swelling up) of the composite heat insulating material 10 caused by bending the outer case and by suppressing swelling up of the outer plate 4 by filling hard urethane foam therein.

FIG. 11 is a diagram illustrating a state in which the composite heat insulating materials 10 are attached in a laminated structure. Here, the composite heat insulating materials 10 are laminated in the V-shaped cut 43. The thin sheets of the composite heat insulating materials 10 may be laminated without being dislocated and then cut according to the V-shaped cut 43 to form the illustrated cross-section. Alternatively, thin sheets of the composite heat insulating materials 10 may be laminated to form shifted layers to form the illustrated cross-section. Alternatively, the cross-section may also be a U-shaped cut rather than the V-shaped cut.

Also, the composite 1 is prepared by immersing the fibrous structure in the aerogel or xerogel before preparing the composite heat insulating material 10 according to the above-described embodiment. However, in a portion of the composite heat insulating material 10 attached to the bent portion of the outer plate 4, the composite 1 may be prepared without synthesizing gel without performing the process of immersing the fibrous structure in the aerogel or xerogel. Thus, flexibility of the fibrous structure may be maintained and the composite heat insulating material 10 may be easily attached to the case according to the shape of the case.

A gas having a lower thermal conductivity than air is used as the low thermal conductivity gas in the above description, the gas corresponds to a gas used in the foam resin heat insulating material such as hard urethane foam filled in the case of the refrigerator when the composite heat insulating material 10 is arranged in the case may also be used. In addition, the composite heat insulating material 10 may be arranged in the case of the refrigerator and then the foam resin heat insulating material such as hard urethane foam may be filled therein.

Also, although the shape of the fibrous structure is not particularly specified in the above description, the fibrous structure may have any shape corresponding to a three-dimensional shape of a component of the case of the refrigerator in which the composite heat insulating material 10 is located. In addition, the composite heat insulating material 10 may be attached to the component and used as the case structure.

The composite heat insulating material 10 is attached to at least one of the surface of the inner case and the surface of the outer case to which the vacuum heat insulating material is attached to overlap the vacuum heat insulating material.

In addition, the foam resin heat insulating material such as hard urethane foam filled in the case when the composite heat insulating material 10 is located in the case may be formed to correspond to a three-dimensional shape of the bent portion R or a corner R of the inner case or the outer case by foaming pressure.

Also, the composite heat insulating material may partially be cut at one surface in contact with the inner case, the outer case, or the vacuum heat insulating material by forming a hole. The hole may be processed to prevent deterioration of rigidity and increase bonding strength.

As described above, according to the second embodiment, the coverage ratio of the heat insulating material may be increased up to 100% by using the method of manufacturing the composite heat insulating material 10 with no external material and arranging the heat insulating material in accordance with the shape of the case by disposing the vacuum heat insulating materials 50, 51, and 52. As a result, a heat insulating case having excellent heat insulating property may be provided.

### [Third Embodiment]

A wall for building by using the composite heat insulating material 10 is provided according to a third embodiment.

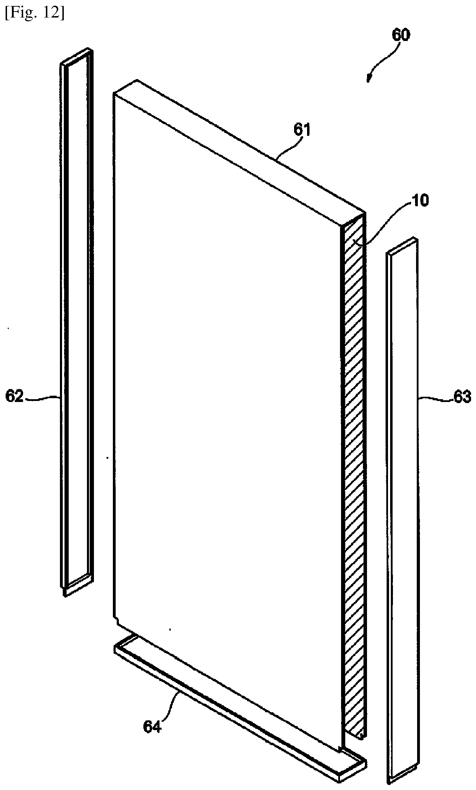

FIG. 12 is a diagram illustrating an example of a wall for building 60. As illustrated herein, the wall for building 60 does not have a case structure including an outer case and an inner case, but has a bent structure with no inner case by disposing the composite heat insulating material 10 on an outer case 61. In addition, the wall for building 60 is manufactured by attaching side plates 62 and 63 and a lower plate 54 to the outer case 61 and filling voids with urethane that is a foam resin.

Although a few embodiments of the present disclosure have been shown and described, it would be appreciated by those skilled in the art that changes may be made in these embodiments without departing from the the scope of the invention, which is defined in the appended claims.

## Claims

1. A refrigerator, comprising:
an inner case;
an outer case coupled to the inner case, the inner case and the outer case defining a space;
a composite heat insulating material (10) disposed in the space between the inner case and the outer case, and comprising a fibrous structure and at least one of an aerogel and a xerogel,
a vacuum heat insulating material (50, 51, 52) disposed in the space between the inner case and the outer case; and
a foam resin heat insulating material filled between the inner case and the outer case,
wherein the vacuum heat insulating material (50, 51, 52) is attached to at least one of a surface of the inner case and a surface of the outer case,
**characterized in that**
the composite heat insulating material (10) is attached to at least one of the surface of the inner case and the surface of the outer case to which the vacuum heat insulating material is attached to overlap the vacuum heat insulating material (50, 51, 52), and the foam resin heat insulating material is provided to cover a surface of the composite heat insulating material (10);
wherein the aerogel and/or the xerogel of the composite heat insulating material has voids filled with a gas having a thermal conductivity lower than that of air;
wherein the gas having a thermal conductivity lower than that of air includes a gas in a foam resin for the foam resin heat insulating material.

2. The refrigerator of claim 1, wherein a coverage ratio of the surface of the inner case or the surface of the outer case to which the composite heat insulating material and the vacuum heat insulating material are attached is greater than 40% and less than 100%.

3. The refrigerator of claim 1, wherein the fibrous structure has a shape corresponding to the inner case.

4. The refrigerator of claim 1, wherein the foam resin heat insulating material is formed by a foaming resin foamed to cover the composite heat insulating material.

5. The refrigerator of claim 4, wherein the vacuum heat insulating material is covered by the foam resin heat insulating material.

## Patentansprüche

1. Kühlschrank, der Folgendes umfasst:
einen inneren Kasten;
einen äußeren Kasten, der mit dem inneren Kasten gekoppelt ist, wobei der innere Kasten und der äußere Kasten einen Raum definieren;
ein Wärmedämmungsverbundmaterial (10), das in dem Raum zwischen dem inneren Kasten und dem äußeren Kasten angeordnet ist und eine Faserstruktur und mindestens eines von einem Aerogel und einem Xerogel umfasst;
ein Vakuumwärmedämmungsmaterial (50, 51, 52), das in dem Raum zwischen dem inneren Kasten und dem äußeren Kasten angeordnet ist; und
ein Schaumharzwärmedämmungsmaterial, das zwischen den inneren Kasten und den äußeren Kasten gefüllt ist;
wobei das Vakuumwärmedämmungsmaterial (50, 51, 52) an mindestens einer von einer Oberfläche des inneren Kastens und einer Oberfläche des äußeren Kastens angebracht ist;
**dadurch gekennzeichnet, dass** das Wärmedämmungsverbundmaterial (10) an mindestens einer von der Oberfläche des inneren Kastens und der Oberfläche des äußeren Kastens angebracht ist, an der das Vakuumwärmedämmungsmaterial angebracht ist, um das Vakuumwärmedämmungsmaterial (50, 51, 52) zu überlappen, und das Schaumharzwärmedämmungsmaterial bereitgestellt ist, um eine Oberfläche des Wärmedämmungsverbundmaterial (10) abzudecken;
wobei das Aerogel und/oder das Xerogel des Wärmedämmungsverbundmaterial Lücken aufweist, die mit einem Gas gefüllt sind, das eine thermische Leitfähigkeit aufweist, die niedriger als die von Luft ist;
wobei das Gas, das eine thermische Leitfähigkeit aufweist, die niedriger als die von Luft ist, ein Gas in einem Schaumharz für das Schaumharzwärmedämmungsmaterial beinhaltet.

2. Kühlschrank nach Anspruch 1, wobei ein Abdeckungsverhältnis der Oberfläche des inneren Kastens oder der Oberfläche des äußeren Kastens, an der das Wärmedämmungsverbundmaterial und das Vakuumwärmedämmungsmaterial angebracht sind, größer als 40 % und kleiner als 100 % ist.

3. Kühlschrank nach Anspruch 1, wobei die Faserstruktur eine Form aufweist, die dem inneren Kasten entspricht.

4. Kühlschrank nach Anspruch 1, wobei das Schaumharzwärmedämmungsmaterial durch ein schäumendes Harz gebildet wird, dass geschäumt wird, um das Wärmedämmungsverbundmaterial abzudecken.

5. Kühlschrank nach Anspruch 4, wobei das Vakuumwärmedämmungsmaterial durch das Schaumharzwärmedämmungsmaterial abgedeckt wird.

## Revendications

1. Réfrigérateur comprenant :
un boîtier intérieur ;
un boîtier extérieur couplé au boîtier intérieur, le boîtier intérieur et le boîtier extérieur définissant un espace ;
un matériau isolant thermique composite (10) disposé dans l'espace entre le boîtier intérieur et le boîtier extérieur, et comprenant une structure fibreuse, et au moins un d'un aérogel et d'un xérogel,
un matériau isolant thermique sous vide (50, 51, 52) disposé dans l'espace entre le boîtier intérieur et le boîtier extérieur ; et
un matériau isolant thermique en résine de mousse rempli entre le boîtier intérieur et le boîtier extérieur,
le matériau isolant thermique sous vide (50, 51, 52) étant fixé sur au moins une d'une surface du boîtier intérieur et une surface du boîtier extérieur,
**caractérisé en ce que**
le matériau isolant thermique composite (10) est fixé sur au moins une de la surface du boîtier intérieur et la surface du boîtier extérieur sur laquelle le matériau isolant thermique sous vide est fixé pour chevaucher le matériau isolant thermique sous vide (50, 51, 52), et le matériau isolant thermique en résine de mousse étant pourvu pour couvrir une surface du matériau isolant thermique composite (10) ;
l'aérogel et/ou le xérogel du matériau isolant thermique composite présentant des vides remplis d'un gaz dont la conductivité thermique est inférieure à celle de l'air ;
le gaz ayant une conductivité thermique inférieure à celle de l'air comprenant un gaz dans une résine de mousse pour le matériau isolant thermique en résine de mousse.

2. Réfrigérateur selon la revendication 1, un taux de couverture de la surface du boîtier intérieur ou de la surface du boîtier extérieur sur laquelle le matériau isolant thermique composite et le matériau isolant thermique sous vide sont fixés étant supérieur à 40% et inférieur à 100%.

3. Réfrigérateur selon la revendication 1, la structure fibreuse ayant une forme correspondant au boîtier intérieur.

4. Réfrigérateur selon la revendication 1, le matériau isolant thermique en résine de mousse étant formé par une résine moussante moussée pour couvrir le matériau isolant thermique composite.

5. Réfrigérateur selon la revendication 4, le matériau isolant thermique sous vide étant couvert par le matériau isolant thermique en résine de mousse.
